# EUROPEAN PATENT APPLICATION

(11) **EP 4 563 381 A1**
(43) Date of publication of application: **04.06.2025**
(21) Application number: 24211065.8
(22) Date of filing: 06.11.2024
(51) Int. Cl.: B60K 6/38, B60K 6/387, B60K 6/48, B60K 6/543, B60K 6/547, B60W 10/06, B60W 10/08, B60W 10/10, B60W 10/101, B60W 10/11, B60W 10/20, B60W 10/26, B60W 20/12, B60W 20/13, B60W 20/15, B60W 20/30, B60W 30/14, B60W 30/20, B60W 50/00, B60W 60/00

(54) **IN-VEHICLE CONTROL DEVICE**

(30) Priority: 30.11.2023 JP 2023203354
(71) Applicant: TOYOTA JIDOSHA KABUSHIKI KAISHA, Aichi-ken, 471-8571 (JP)
(72) Inventor: YOSHIKAWA, Masato, Toyota-shi, 471-8571 (JP)
(74) Representative: TBK

(57) **Abstract**

An in-vehicle control device (40) is configured to be installed in a vehicle (20) including an engine (22), a transmission (30) configured to change speed of motive power of the engine (22) and perform output to a drive shaft (36) connected to a drive wheel, an electric motor (26) configured to input and output motive power to and from the drive shaft (36), a power storage device (29) configured to input and output electric power to and from the electric motor (26), and a steering device (34). The in-vehicle control device (40) includes a processor (41), and the processor (41) is configured to, at a time of driving force increase request when a driving force increase request is made to bring the vehicle (20) into a predetermined target state during the automated driving control, give priority to driving force increase from the electric motor (26) without downshifting the transmission (30), over driving force increase that involves downshifting the transmission (30).

## Description

### BACKGROUND OF THE INVENTION

### 1. Field of the Invention

The present disclosure relates to an in-vehicle control device, and more particularly to an in-vehicle control device that is installed in a vehicle and configured to execute a plurality of driving controls including automated driving control and manual driving control.

### 2. Description of Related Art

As an example of an in-vehicle control device of this type, there is an arrangement that has been proposed that, when an increase in requested driving force is predicted while automated driving control is being performed, maintains or decelerates vehicle speed of the vehicle until a timing of increase in the requested driving force, increases engine revolutions during a standby period until the timing of increase in the requested driving force, reduces engine torque in response to the increase in engine revolutions, and performs downshifting of a gear stage of an automatic transmission (e.g., see Japanese Unexamined Patent Application Publication No. 2021-160537 (JP 2021-160537 A)). By the above control, this in-vehicle control device reduces vibrations, noise, and gearshift shock due to downshifting when an increase in the requested driving force is predicted during automated driving.

### SUMMARY OF THE INVENTION

However, with the above-described in-vehicle control device, downshifting may be performed even when an increase in requested driving force is predicted due to a slight gradient or when an increase in requested driving force is predicted due to traveling around a curve. In this case, a driver and passengers will be subjected to gearshift shock due to unexpected downshifting and noise due to an increase in engine revolutions, resulting in reduced drivability.

A main object of the in-vehicle control device according to the present disclosure is to improve drivability by suppressing downshifting of a transmission in response to driving force increase requests during automated driving control.

The in-vehicle control device according to the present disclosure employs the following means to achieve the above-described main object.

An in-vehicle control device according to a first aspect of the present disclosure is an in-vehicle control device configured to be installed in a vehicle including an engine, a transmission configured to change speed of motive power of the engine and output the motive power to a drive shaft connected to a drive wheel, an electric motor configured to input and output motive power to and from the drive shaft, a power storage device configured to input and output electric power to and from the electric motor, and a steering device, the in-vehicle control device being configured to execute a plurality of types of driving control including automated driving control in which the engine, the transmission, the electric motor, and the steering device are controlled such that the vehicle travels by automated driving, and manual driving control in which the engine, the transmission, the electric motor, and the steering device are controlled such that the vehicle travels by manual driving, the in-vehicle control device including a processor, in which the processor is configured to, at a time of driving force increase request when a driving force increase request is made to bring the vehicle into a predetermined target state during the automated driving control, give priority to driving force increase from the electric motor in which driving force from the electric motor is increased without downshifting the transmission, over driving force increase that involves downshifting of the transmission.

As described above, the in-vehicle control device according to the first aspect of the present disclosure is configured to be installed in the vehicle including the engine, the transmission configured to change speed of motive power of the engine and output the motive power to the drive shaft connected to the drive wheel, the electric motor configured to input and output motive power to and from the drive shaft, the power storage device configured to input and output electric power to and from the electric motor, and the steering device, the in-vehicle control device being configured to execute the multiple types of driving control including automated driving control in which the engine, the transmission, the electric motor, and the steering device are controlled such that the vehicle travels by automated driving, and manual driving control in which the engine, the transmission, the electric motor, and the steering device are controlled such that the vehicle travels by manual driving. The in-vehicle control device includes the processor, and the processor is configured to, at a time of driving force increase request when a driving force increase request is made to bring the vehicle into a predetermined target state during the automated driving control, give priority to driving force increase from the electric motor in which driving force from the electric motor is increased without downshifting the transmission, over driving force increase that involves downshifting of the transmission. Thus, when a driving force increase request is made, driving force increase from the electric motor without downshifting the transmission is prioritized over driving force increase that involves downshifting of the transmission, and accordingly downshifting of the transmission can be suppressed, thereby suppressing gearshift shock involving downshifting of the transmission and noise caused by sudden increase in engine revolutions. As a result, drivability can be improved. The predetermined target state includes vehicle speed and acceleration planned for traveling in each section of the traveling route when performing automated driving of the vehicle, vehicle speed and acceleration set by a user, the legal speed limit, and so forth.

In the in-vehicle control device according to the first aspect of the present disclosure, the processor may be configured to, at the time the driving force increase request is made, and when a predicted state predicted by increase in driving force from the electric motor is within an allowable range from the predetermined target state, perform the driving force increase from the electric motor without downshifting the transmission, and when the predicted state is not within the allowable range, perform driving force increase from the engine that involves downshifting of the transmission. Thus, the vehicle can travel without downshifting the transmission when the predicted state is within an allowable range from the predetermined target state, and can quickly travel in the predetermined target state, albeit with downshifting of the transmission, when the predicted state is outside the allowable range from the predetermined target state.

In the in-vehicle control device according to the first aspect of the present disclosure, the processor may be configured to, at the time the driving force increase request is made, and when a predicted state predicted by driving force increase from the engine that is increasable without changing speeds and the driving force increase from the electric motor is within an allowable range from the predetermined target state, perform the driving force increase from the engine that is increasable without changing speeds and the driving force increase from the electric motor, and when the predicted state is not within the allowable range, perform driving force increase from the engine that involves downshifting of the transmission. Thus, the vehicle can travel without downshifting the transmission when the predicted state is within an allowable range from the predetermined target state, and can quickly travel in the predetermined target state, albeit with downshifting of the transmission, when the predicted state is outside the allowable range from the predetermined target state.

In the in-vehicle control device according to the first aspect of the present disclosure, the processor may be configured to predict the predicted state within a range of allowable output electric power that is outputtable from the power storage device. In this case, the processor may be configured to predict the predicted state based on electric motor required power by which the driving force from the electric motor is increasable within a range of allowable output electric power that can be output from the power storage device, and an allowable duration time during which the electric motor required power can be continuously output from the power storage device.

An in-vehicle control device according to a second aspect of the present disclosure is an in-vehicle control device configured to be installed in a vehicle including an engine, a transmission configured to change speed of motive power of the engine and output the motive power to a drive shaft connected to a drive wheel, an electric motor configured to input and output motive power to and from the drive shaft, a power storage device configured to input and output electric power to and from the electric motor, and a steering device, the in-vehicle control device being configured to execute a plurality of types of driving control including automated driving control in which the engine, the transmission, the electric motor, and the steering device are controlled such that the vehicle travels by automated driving, and manual driving control in which the engine, the transmission, the electric motor, and the steering device are controlled such that the vehicle travels by manual driving, the in-vehicle control device including a processor, in which the processor is configured to, at a time of driving force increase request when a driving force increase request is made to bring the vehicle into a predetermined target state during the automated driving control, give priority to driving force increase by the electric motor over driving force increase by the engine.

As described above, the in-vehicle control device according to the second aspect of the present disclosure is configured to be installed in the vehicle including the engine, the transmission configured to change speed of motive power of the engine and output the motive power to the drive shaft connected to the drive wheel, the electric motor configured to input and output motive power to and from the drive shaft, the power storage device configured to input and output electric power to and from the electric motor, and the steering device, the in-vehicle control device being configured to execute the multiple types of driving control including automated driving control in which the engine, the transmission, the electric motor, and the steering device are controlled such that the vehicle travels by automated driving, and manual driving control in which the engine, the transmission, the electric motor, and the steering device are controlled such that the vehicle travels by manual driving. The in-vehicle control device includes a processor, and the processor is configured to, at a time of driving force increase request when a driving force increase request is made to bring the vehicle into a predetermined target state during the automated driving control, give priority to driving force increase by the electric motor over driving force increase by the engine. Thus, when a driving force increase request is made, the driving force increase by the electric motor is prioritized over the driving force increase by the engine, and accordingly downshifting of the transmission can be suppressed, thereby suppressing gearshift shock involving downshifting of the transmission and noise caused by sudden increase in engine revolutions. As a result, drivability can be improved. Note that the predetermined target state is the same as that described above.

In the in-vehicle control device according to the second aspect of the present disclosure, the processor may be configured to, at the time the driving force increase request is made, give priority to driving force increase from the electric motor without downshifting the transmission, over driving force increase that involves downshifting of the transmission, as compared to the manual driving control. This enables the vehicle to be driven in a predetermined target state more smoothly than in manual driving control.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a configuration diagram illustrating an overview of a configuration of a hybrid electric vehicle according to an embodiment of the present disclosure;
FIG. 2 is a shift diagram showing an example of shift lines for an automatic transmission device;
FIG. 3 is a flowchart showing an example of driving force increase request-underway processing, executed by a main ECU; and
FIG. 4 is a flowchart showing an example of driving force increase request-underway processing, according to a modified example.

### DETAILED DESCRIPTION OF EMBODIMENTS

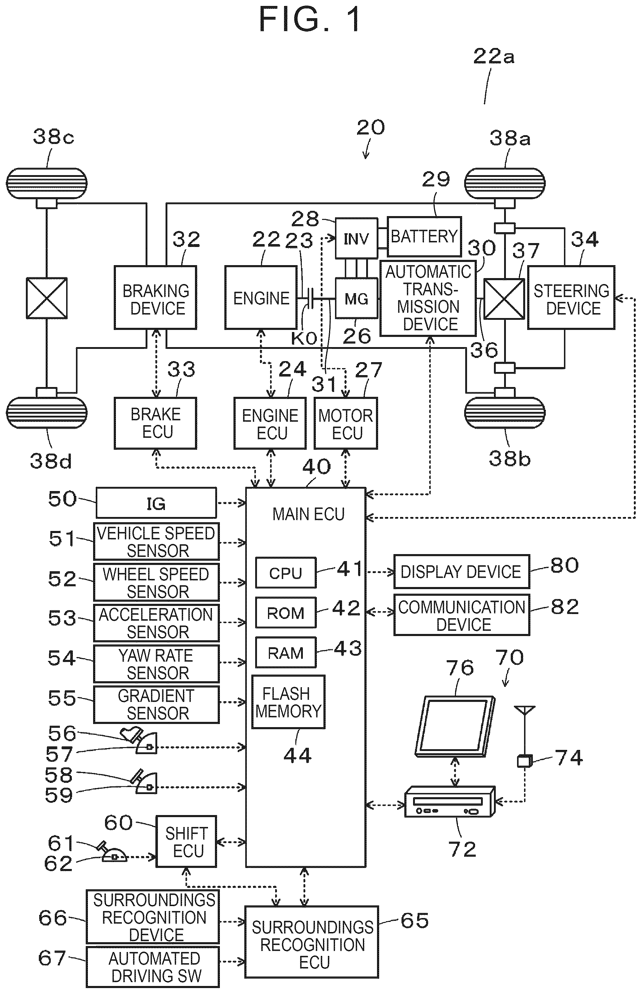

Next, a mode (embodiment) for carrying out the present disclosure will be described. FIG. 1 is a configuration diagram illustrating an overview of a configuration of a hybrid electric vehicle 20 according to an embodiment of the present disclosure. As illustrated, the hybrid electric vehicle 20 according to the embodiment includes an engine 22, a motor 26, a battery 29, an automatic transmission device 30, a braking device 32, a steering device 34, and an electronic control unit (hereinafter referred to as "main ECU") 40.

The engine 22 is configured as an internal combustion engine that outputs motive power using fuel such as gasoline, diesel fuel, or the like, from a fuel tank. A crankshaft 23 of the engine 22 is connected to a rotating shaft 31 (rotor) of the motor 26 via a clutch K0. Operation of the engine 22 is controlled by an engine electronic control unit (hereinafter referred to as "engine ECU") 24.

Although omitted from illustration, the engine ECU 24 includes a microcomputer having a control processing unit (CPU), read-only memory (ROM), random-access memory (RAM), flash memory, input and output ports, and a communication port. The engine ECU 24 receives input of signals that are necessary for controlling the operation of the engine 22, from various types of sensors via the input port, such as a crank angle θcr from a crank position sensor (omitted from illustration) that detects a rotational position of the crankshaft 23 of the engine 22, and a coolant temperature Tw from a water temperature sensor (omitted from illustration) that detects temperature of coolant for the engine 22, and other such signals, for example. Various types of control signals for controlling the operation of the engine 22 are output from the engine ECU 24 via the output port. The engine ECU 24 is connected to the main ECU 40 via the communication port. The engine ECU 24 computes revolutions Ne of the engine 22 based on the crank angle θcr of the crankshaft 23 from the crank position sensor.

The motor 26 is configured as a synchronous generator-motor, and has a rotor in which permanent magnets are embedded in a rotor core, and a stator in which coils of three phases are wound onto a stator core. The rotating shaft 31 to which the rotor of the motor 26 is fixed is connected to the crankshaft 23 of the engine 22 via the clutch K0, and is also connected to an input shaft of the automatic transmission device 30. The motor 26 is driven to rotate by a motor electronic control unit (hereinafter referred to as "motor ECU") 27 controlling switching of a plurality of switching devices of an inverter 28, thereby converting direct current electric power from the battery 29 into three-phase alternating current electric power and performing application thereof to three-phase coils of the motor 26.

Although omitted from illustration, the motor ECU 27 includes a microcomputer having a CPU, ROM, RAM, flash memory, input and output ports, and a communication port. The motor ECU 27 receives input of signals from various types of sensors, such as rotational position θm from a rotational position sensor (omitted from illustration) that detects the rotational position of the rotor (rotating shaft 31) of the motor 26, phase currents Iu, Iv from current sensors that detect the phase currents of each phase of the motor 26, and so forth, via the input port, for example. The motor ECU 27 outputs control signals and so forth to the inverter 28 via the output port. The motor ECU 27 is connected to the main ECU 40 via the communication port. The motor ECU 27 computes the revolutions Nm of the motor 26, based on the rotational position θm of the rotor (rotating shaft 31) of the motor 26 from the rotational position sensor.

The clutch K0 is configured as, for example, a hydraulically driven friction clutch, and is controlled by the main ECU 40 to connect and disconnect the crankshaft 23 of the engine 22 and the rotating shaft 31 of the motor 26.

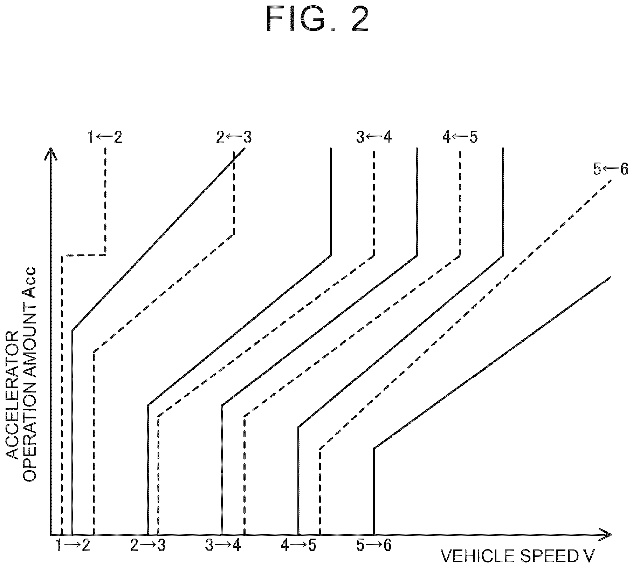

The automatic transmission device 30 includes a torque converter and a stepped (for example, six-speed) automatic transmission. The torque converter is configured as a typical hydraulic power transmission device, and transmits the motive power of an input shaft connected to the rotating shaft 31 of the motor 26 to the input shaft of the automatic transmission with amplified torque, transmits the torque as is without performing amplifying thereof, and so forth. The automatic transmission realizes forward gears from first gear to Nth gear, and reverse gear, by engaging and disengaging a plurality of friction engagement elements, and transmits motive power between the input shaft thereof and a drive shaft 36 serving as an output shaft. Hydraulic pressure of hydraulic fluid from a mechanical oil pump or an electric oil pump is adjusted and supplied to the clutch K0 and the automatic transmission, by a hydraulic control device that is omitted from illustration. The hydraulic control device includes a valve body in which a plurality of oil passages is formed, a plurality of regulator valves, a plurality of linear solenoid valves, and so forth. This hydraulic control device is controlled by the main ECU 40. The main ECU 40 applies an accelerator operation amount Acc and a vehicle speed V to a six-speed shift diagram shown in FIG. 2 to change the gear stage of the automatic transmission. In FIG. 2, the continuous lines are upshift lines and the dashed lines are downshift lines. Upshifting occurs when crossing an upshift line from left to right, and downshifting occurs when crossing a downshift line from right to left.

The braking device 32 is configured as a known hydraulically driven braking device, and is configured to be able to apply braking force, due to from brake depression force applied by depressing a brake pedal 58, or braking force due to hydraulic pressure adjustment, to drive wheels 38a and 38b, and driven wheels 38c and 38d. The braking device 32 is controlled and driven by a brake electronic control unit (hereinafter referred to as "brake ECU") 33. Although omitted from illustration, the brake ECU 33 includes a microcomputer having a CPU, ROM, RAM, flash memory, input and output ports, and a communication port. The brake ECU 33 controls the braking force generated by the braking device 32 due to the brake depression force, and the braking force generated by hydraulic pressure adjustment. Note that the brake ECU 33 communicates with the main ECU 40 via the communication port.

In the steering device 34, a steering wheel that is omitted from illustration and the drive wheels 38a and 38b are mechanically connected via a steering shaft. The steering device 34 includes an actuator for steering. The steering device 34 steers the drive wheels 38a and 38b based on operations performed by the driver, and also steers the drive wheels 38a and 38b by driving the actuator based on steering signals from the main ECU 40.

Although omitted from illustration, the main ECU 40 includes a microcomputer having a CPU 41, ROM 42, RAM 43, flash memory 44, and input and output ports and a communication port that are omitted from illustration. Signals from various types of sensors are input to the main ECU 40 via the input port. Examples of signals input to the main ECU 40 include an ignition signal from an ignition switch 50, vehicle speed V from a vehicle speed sensor 51, individual wheel speeds from wheel speed sensors 52, acceleration α from an acceleration sensor 53, yaw rate Yr from a yaw rate sensor 54, road surface gradient θr from a gradient sensor 55, accelerator operation amount Acc from an accelerator pedal position sensor 57 that detects the amount of depression of an accelerator pedal 56, brake pedal position BP from a brake pedal position sensor 59 that detects the amount of depression of the brake pedal 58, signals from sensors that detect various states of the clutch K0 and the hydraulic control device of the automatic transmission device 30, signals from sensors that detect various states of the steering device 34, battery voltage Vb from a voltage sensor (omitted from illustration) that is connected to an output terminal of the battery 29, battery current Ib from a current sensor (omitted from illustration) that is connected to the output terminal of the battery 29, and so forth.

Various types of control signals are output from the main ECU 40 via the output port. Examples of control signals output from the main ECU 40 may include control signals to the hydraulic control device, control signals to the steering device 34, display control signals to a display device 80, communication control signals to a communication device 82, and so forth. The main ECU 40 computes a state of charge (SOC) of the battery 29, input limit Win, and output limit Wout, and so forth, based on the battery voltage Vb from the voltage sensor connected to the output terminal of the battery 29, and the battery current Ib from the current sensor connected to the output terminal of the battery 29. The state of charge SOC is the proportion of the remaining charge as to the total capacity of the battery 29, the input limit Win is the maximum allowable electric power when charging the battery 29, and the output limit Wout is the maximum allowable electric power that can be output from the battery 29.

As described above, the main ECU 40 communicates with the engine ECU 24, the motor ECU 27, the brake ECU 33, and so forth via the communication port. The main ECU 40 also communicates with a shift electronic control unit (hereinafter referred to as "shift ECU") 60, a surroundings recognition electronic control unit (hereinafter referred to as "surroundings recognition ECU") 65, and an automotive navigation system 70 via the communication port.

Although omitted from illustration, the shift ECU 60 includes a microcomputer having a CPU, ROM, RAM, flash memory, input and output ports, and a communication port. Shift position signals from a shift position sensor 62 that detects an operation position of a shift lever 61 is input to the shift ECU 60 via the input port. Shift positions include a parking position (P range), a neutral position (N range), a drive position (D range), a reverse position (R range), and so forth. The shift ECU 60 is connected to the main ECU 40 and also to the surroundings recognition ECU 65 via the communication port, sets the shift position based on a shift position signal from the shift position sensor 62 and a control signal from the surroundings recognition ECU 65, transmits the shift position that is set to the main ECU 40, and so forth.

Although omitted from illustration, the surroundings recognition ECU 65 includes a microcomputer having a CPU, ROM, RAM, flash memory, input and output ports, and a communication port. Various types of signals are input to the surroundings recognition ECU 65 via the input port. Examples of signals input to the surroundings recognition ECU 65 include signals indicating information about the vehicle and its surroundings from a surroundings recognition device 66 (e.g., vehicle-to-vehicle distances D1 and D2 between the vehicle and other vehicles ahead of and behind the vehicle, the traveling position of the vehicle relative to lane demarcation lines on the road surface, and so forth), an automated driving mode signal from an automated driving switch 67, and so forth. Examples of the surroundings recognition device 66 include a camera, a millimeter wave radar device, a quasi-millimeter wave radar device, an infrared laser radar device, a sonar device, and so forth. The automated driving switch 67 is a switch that switches among a fully automated driving mode in which all driving operations are performed automatically, a semi-automated driving mode in which some driving operations are performed by the driver, and a manual driving mode in which all driving operations are performed by the driver. Examples of the semi-automated driving mode include adaptive cruise control and so forth. Note that assistance control for collision avoidance or mitigation is performed in all driving modes. As described above, the surroundings recognition ECU 65 communicates with the main ECU 40 and the shift ECU 60 via the communication port.

The automotive navigation system 70 includes a main unit 72 into which a control unit is built in, a Global Positioning System (GPS) antenna 74 for receiving information relating to the current location of the vehicle, and a display 76. The control unit of the main unit 72 has a storage medium (e.g., a hard disk drive, a solid-state drive (SSD), or the like) in which map information and so forth is stored, input and output ports, and a communication port. The map information stores service information (e.g., tourism information, parking areas, and so forth), road information for each traveling section (e.g., between traffic lights, between intersections, or the like), and so forth, as a database. The road information includes distance information, width information, number-of-lanes information, region information (urban or suburban), type information (general road or expressway), gradient information, legal speed limit, number of traffic lights, turning radius of each curve, and so forth. The display 76 is configured as a touch panel display that displays various types of information, such as information about the current location of the vehicle, the planned driving route to the destination, and so forth, and that allows a user to input various types of instructions. When a destination is set by the user operating the display 76, the main unit 72 of the automotive navigation system 70 sets a planned driving route from the current position of the vehicle to the destination, based on the map information stored in the main unit 72 and the current position of the vehicle obtained from the GPS antenna 74 and the destination thereof, and displays the planned driving route that has been set on the display 76 to provide route guidance.

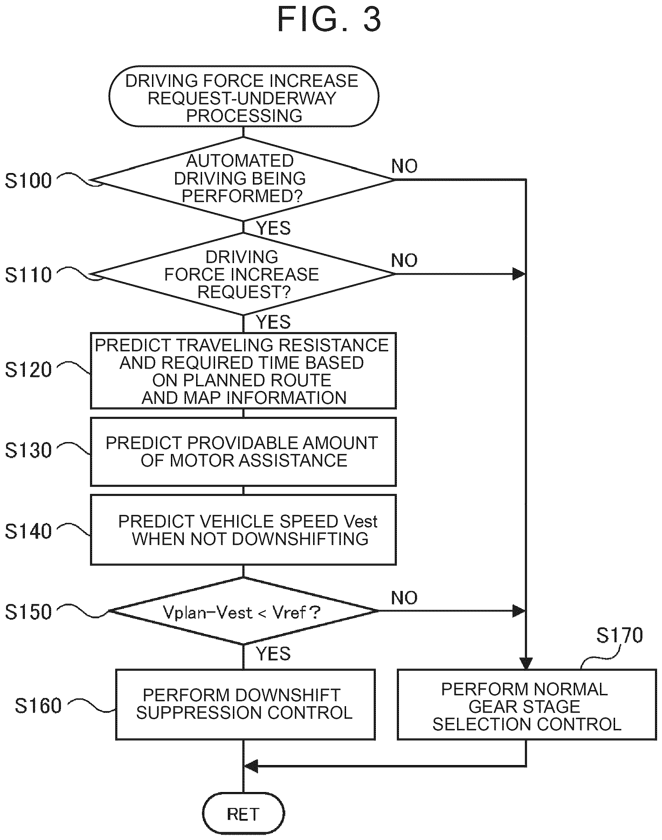

Next, the operations of the hybrid electric vehicle 20 of this embodiment configured as described above, particularly the operations when a request for an increase in driving force is made while automated driving control is being executed, will be described. FIG. 3 is a flowchart showing an example of driving force increase request-underway processing, executed by the main ECU 40.

When starting the driving force increase request-underway processing, the main ECU 40 first determines whether automated driving control is being executed (step S100). When determining that the automated driving control is not being executed, the current situation is not subject to this processing, and accordingly the main ECU 40 performs normal gear stage selection control (step S170) and ends this processing.

When determining in step S 100 that automated driving control is being executed, the main ECU 40 determines whether a driving force increase request has been made (step S 110). A driving force increase request is made when the vehicle is traveling on a slight uphill gradient, around a curve, or the like, on the planned travel route. When determining that a driving force increase request has not been made, the current situation is not subject to this processing, and accordingly the main ECU 40 performs normal gear stage selection control (step S170) and ends this processing.

When determining in step S 110 that a driving force increase request has been made, the main ECU 40 predicts traveling resistance (energy required for traveling) and required time for which driving force increase will be required, based on the planned travel route and the map information (step S120). The map information includes the road surface gradient, radii of curves, and so forth, for each traveling section on the traveling route, and accordingly the traveling resistance can be calculated using this information together with planned vehicle speed Vplan and information related to the hybrid electric vehicle 20. The planned vehicle speed Vplan is a target vehicle speed when traveling along each traveling section of the planned travel route, and vehicle speed that is set by the user for each traveling section, the legal speed limit that is set for each traveling section, or the like, can be used. The required time is time required to travel the section, regarding which driving force increase is required, at the planned vehicle speed Vplan.

Next, the main ECU 40 predicts the amount of assistance that can be provided by the motor 26 (also referred to as "providable amount of motor assistance") based on the amount of increase in traveling resistance (step S130). The amount of increase in traveling resistance can be found as difference between the traveling resistance before and after a driving force increase request is made. The amount of assistance that can be provided can be expressed as the outputtable torque that can be output from the motor 26 within the range of the output limit Wout to compensate for the torque increase required for the increase in traveling resistance, and the duration of time during which the outputtable torque can be output from motor 26 that is found based on the state of charge SOC and the output limit W out.

Next, the main ECU 40 calculates a predicted vehicle speed Vest when the driving force increase is assisted by the motor 26 without downshifting the automatic transmission device 30, based on the amount of assistance that the motor 26 can provide (step S140). That is to say, the main ECU 40 determines an estimated vehicle speed V (predicted vehicle speed Vest), when the torque that can be output from the motor 26 while in a state of maintaining the current operating state of the engine 22 and the gear stage of the automatic transmission device 30, is output for a duration of time limited to within the range of the required time.

Next, the main ECU 40 determines whether a value obtained by subtracting the predicted vehicle speed Vest from the planned vehicle speed Vplan is smaller than a threshold value Vref (step S150). The threshold value Vref is determined in advance, as an upper limit of the range of allowable deviation of the vehicle speed V from the planned vehicle speed Vplan, and 3 km/h, 5 km/h, or the like, can be used. When determining that the value obtained by subtracting the predicted vehicle speed Vest from the planned vehicle speed Vplan is smaller than the threshold value Vref, the main ECU 40 executes downshift suppression control to compensate for the driving force increase request with output from the motor 26 without downshifting the automatic transmission device 30 (step S160), and then ends this processing. Thus, automated driving continues without downshifting the automatic transmission device 30, and accordingly, gearshift shock caused by downshifting and noise caused by sudden increase in the revolutions of the engine 22, and so forth, can be suppressed. On the other hand, when determining that the value obtained by subtracting the predicted vehicle speed Vest from the planned vehicle speed Vplan is equal to or greater than the threshold value Vref, the main ECU 40 performs normal gear stage selection control (step S170) and ends this processing.

When a driving force increase request is made while executing automated driving control, the main ECU 40 installed in the hybrid electric vehicle 20 according to the embodiment determines the amount of assistance that the motor 26 can provide, and when the predicted vehicle speed Vest obtained from this amount of assistance that can be provided is within an allowable range of the planned vehicle speed Vplan (within a range smaller than the threshold value Vref), executes downshift suppression control to compensate for the driving force increase request with the output from the motor 26 without downshifting the automatic transmission device 30. That is to say, when a driving force increase request is made while automated driving control is being executed, the main ECU 40 prioritizes driving force increase from the motor 26 (i.e., gives priority to an increase in driving force from the motor 26) without downshifting the automatic transmission device 30, over driving force increase that involves downshifting of the automatic transmission device 30. This enables gearshift shock caused by downshifting the automatic transmission device 30 and noise caused by sudden increase in revolutions of the engine 22, and so forth, to be suppressed, thereby improving drivability.

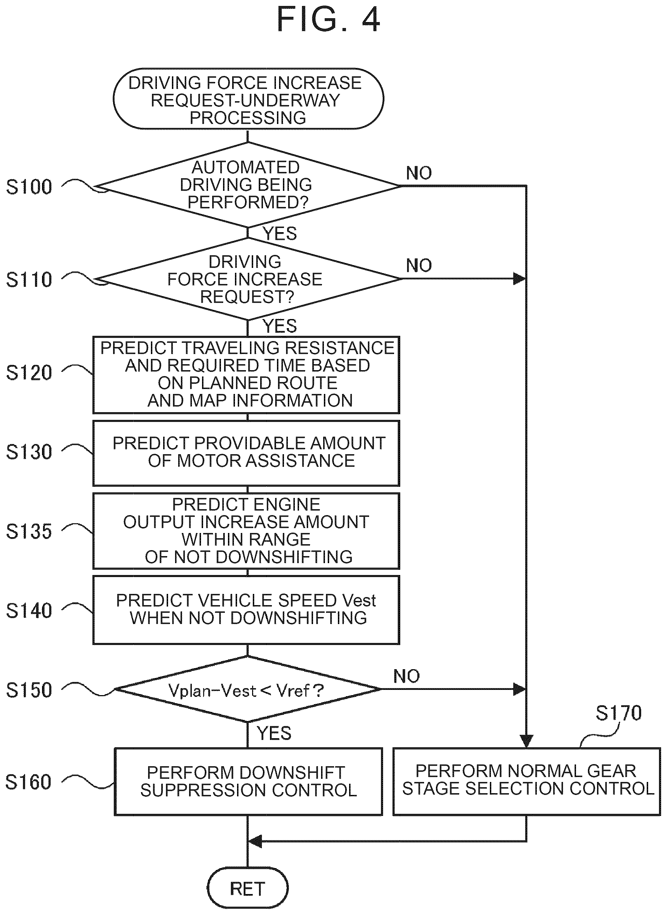

In the hybrid electric vehicle 20 according to the embodiment, when a driving force increase request is made while executing automated driving control, and the predicted vehicle speed Vest based on the amount of assistance that can be provided by the motor 26 while in a state of maintaining the current operating state of the engine 22 and the gear stage of the automatic transmission device 30 is within an allowable range of the planned vehicle speed Vplan (within a range smaller than the threshold value Vref), the main ECU 40 executes downshift suppression control to compensate for the driving force increase request with output from the motor 26 without downshifting the automatic transmission device 30. However, the main ECU 40 may compensate for the driving force increase request without downshifting the automatic transmission device 30 by increasing the torque of the engine 22 and also performing assistance by the motor 26, while in a state of maintaining the gear stage of the automatic transmission device 30. An example of the driving force increase request-underway processing in this case is shown in FIG. 4. The driving force increase request-underway processing in FIG. 4 is the same as the driving force increase request-underway processing in FIG. 3, except for the point that processing of step S135 is added, the point that the calculation technique is different for the processing of step S 140 to calculate the predicted vehicle speed Vest when performing driving force increase without downshifting the automatic transmission device 30, and the point that the downshift suppression control is different in step S160.

In the driving force increase request-underway processing in FIG. 4, the main ECU 40 predicts the amount of assistance that the motor 26 can provide in step S130, and thereupon calculates an output torque increase amount for increasing output torque from the engine 22 within a range without downshifting (step S135). With reference to the shift diagram in FIG. 2, the increase in output torque of the engine 22 is the increase in output torque of the engine 22 within a range in which the accelerator operation amount Acc can be increased within a range that does not cross the dashed downshift line from right to left, based on the current accelerator operation amount Acc and vehicle speed V (amount of increase in torque of the engine 22 corresponding to the amount of increase in accelerator operation amount Acc). Next, the main ECU 40 calculates a predicted vehicle speed Vest when the driving force increase is assisted by the motor 26 without downshifting the automatic transmission device 30, and when the output torque of the engine 22 is increased within the range of the increase in output torque of the engine 22, based on the amount of assistance that the motor 26 can provide and the increase in output torque of the engine 22 (step S140). The main ECU 40 determines whether a value obtained by subtracting the predicted vehicle speed Vest from the planned vehicle speed Vplan is smaller than the threshold value Vref (step S150), and when determining that the value obtained by subtracting the predicted vehicle speed Vest from the planned vehicle speed Vplan is smaller than the threshold value Vref, the main ECU 40 executes downshift suppression control to compensate for the driving force increase request by increasing the output from the motor 26 and the output torque of the engine 22, without downshifting the automatic transmission device 30 (step S160), and then ends this processing. On the other hand, when determining that the value obtained by subtracting the predicted vehicle speed Vest from the planned vehicle speed Vplan is equal to or greater than the threshold value Vref, the main ECU 40 performs normal gear stage selection control (step S170) and ends this processing.

Even when the driving force increase request-underway processing, exemplified in the modification in FIG. 4, is executed, gearshift shock caused by downshifting of the automatic transmission device 30 and noise caused by a sudden increase in the revolutions of the engine 22 can be suppressed, thereby improving drivability.

In the hybrid electric vehicle 20 according to the embodiment, when a driving force increase request is made while executing automated driving control, and the predicted vehicle speed Vest based on the amount of assistance that can be provided by the motor 26 while in a state of maintaining the current operating state of the engine 22 and the gear stage of the automatic transmission device 30 is within an allowable range of the planned vehicle speed Vplan, the main ECU 40 executes downshift suppression control to compensate for the driving force increase request with output from the motor 26 without downshifting the automatic transmission device 30. However, when a driving force increase request is made while automated driving control is being executed, the main ECU 40 may execute downshift suppression control when the predicted states of the vehicle, such as the vehicle speed and acceleration thereof, predicted by the amount of assistance that the motor 26 can provide while maintaining the current operating state of the engine 22 and the gear stage of the automatic transmission device 30, are within the allowable range of the target state that is the planned target (i.e., the vehicle speed is within a threshold value range, the acceleration is within a threshold value range, or the like).

In the hybrid electric vehicle 20 according to the embodiment, when a driving force increase request is made while automated driving control is being executed and the predicted vehicle speed Vest is within an allowable range of the planned vehicle speed Vplan, the main ECU 40 executes downshift suppression control to compensate for the driving force increase request with output from the motor 26 without downshifting the automatic transmission device 30. In this case, the driving force increase request may be met by the output from the motor 26, as compared to a case of manual driving control.

Although the hybrid electric vehicle 20 according to the embodiment is equipped with the stepped automatic transmission device 30, the automatic transmission device 30 may be a continuously variable transmission.

In the hybrid electric vehicle 20 according to the embodiment, the motor 26 and the automatic transmission device 30 are connected to the crankshaft 23 of the engine 22 via the clutch K0, but the motor 26 and the automatic transmission device 30 may also be connected to the crankshaft 23 of the engine 22 without intervening the clutch K0. Also, in addition to the configuration in which the motor 26 and the automatic transmission device 30 are connected to the crankshaft 23 of the engine 22 via the clutch K0, a second motor may be attached to an axle connected to the wheels 38c and 38d. Also, instead of the motor 26, the hybrid electric vehicle 20 may be provided with in-wheel motors that are directly attached to the drive wheels 38a and 38b. That is to say, the hybrid electric vehicle 20 can be of any configuration as long as it is a vehicle equipped with an engine, a transmission that changes speed of motive power of the engine and performs output thereof to a drive shaft connected to the drive wheels, an electric motor that can input and output motive power to and from the drive shaft, a power storage device that can input and output electric power to and from the electric motor, and a steering device.

The correlation between the primary elements of the embodiments and the primary elements of the present disclosure described in the SUMMARY OF THE INVENTION will be described below. In the embodiment, the engine 22 is an example of "engine", the automatic transmission device 30 is an example of "transmission", the motor 26 is an example of "electric motor", the battery 29 is an example of "power storage device", the steering device 34 is an example of "steering device", the hybrid electric vehicle 20 is an example of "vehicle", and the main ECU 40, the engine ECU 24, the motor ECU 27, and the brake ECU 33 are examples of "in-vehicle control device".

Note that the correlation between the primary elements of the embodiment and the primary elements of the invention described in the SUMMARY OF THE INVENTION does not limit the elements of the invention described in the SUMMARY OF THE INVENTION, since the embodiment is an example for providing a specific description of a form for implementing the invention described in the SUMMARY OF THE INVENTION. That is to say, the interpretation of the invention described in the SUMMARY OF THE INVENTION should be based on the description in that section, and the embodiment is merely a specific example of the invention described in the SUMMARY OF THE INVENTION.

While a form for carrying out the invention has been described above by way of an embodiment, the invention is not limited to such an embodiment in any way, and it goes without saying that the invention can be carried out in various forms without departing from the spirit of the invention.

The invention is applicable in the automobile manufacturing industry and so forth. The invention is applicable to an autonomous vehicle.

## Claims

1. An in-vehicle control device (40) configured to be installed in a vehicle (20) including an engine (22), a transmission (30) configured to change speed of motive power of the engine (22) and output the motive power to a drive shaft (36) connected to a drive wheel, an electric motor (26) configured to input and output motive power to and from the drive shaft (36), a power storage device (29) configured to input and output electric power to and from the electric motor (26), and a steering device (34), the in-vehicle control device (40) being configured to execute a plurality of types of driving control including automated driving control in which the engine (22), the transmission (30), the electric motor (26), and the steering device (34) are controlled such that the vehicle (20) travels by automated driving, and manual driving control in which the engine (22), the transmission (30), the electric motor (26), and the steering device (34) are controlled such that the vehicle (20) travels by manual driving, the in-vehicle control device (40) comprising a processor (41), wherein
the processor (41) is configured to, at a time of driving force increase request when a driving force increase request is made to bring the vehicle (20) into a predetermined target state during the automated driving control, give priority to driving force increase from the electric motor (26) in which driving force from the electric motor (26) is increased without downshifting the transmission (30), over driving force increase that involves downshifting of the transmission (30).

2. The in-vehicle control device (40) according to claim 1, wherein the processor (41) is configured to, at the time the driving force increase request is made, and when a predicted state predicted by driving force increase from the electric motor (26) is within an allowable range from the predetermined target state, perform the driving force increase from the electric motor (26) without downshifting the transmission (30), and when the predicted state is not within the allowable range, perform driving force increase from the engine (22) that involves downshifting of the transmission (30).

3. The in-vehicle control device (40) according to claim 1, wherein the processor (41) is configured to, at the time the driving force increase request is made, and when a predicted state predicted by driving force increase from the engine (22) that is increasable without changing speeds and the driving force increase from the electric motor (26) is within an allowable range from the predetermined target state, perform the driving force increase from the engine (22) that is increasable without changing speeds and the driving force increase from the electric motor (26), and when the predicted state is not within the allowable range, perform driving force increase from the engine (22) that involves downshifting of the transmission (30).

4. The in-vehicle control device (40) according to claim 2 or 3, wherein the processor (41) is configured to predict the predicted state within a range of allowable output electric power that is outputtable from the power storage device (29).

5. The in-vehicle control device (40) according to claim 4, wherein the processor (41) is configured to predict the predicted state based on electric motor required power by which the driving force from the electric motor (26) is increasable within a range of allowable output electric power that is outputtable from the power storage device (29), and an allowable duration of time during which the electric motor required power is continuously outputtable from the power storage device (29).

6. An in-vehicle control device (40) configured to be installed in a vehicle (20) including an engine (22), a transmission (30) configured to change speed of motive power of the engine (22) and output the motive power to a drive shaft (36) connected to a drive wheel, an electric motor (26) configured to input and output motive power to and from the drive shaft (36), a power storage device (29) configured to input and output electric power to and from the electric motor (26), and a steering device (34), the in-vehicle control device (40) being configured to execute a plurality of types of driving control including automated driving control in which the engine (22), the transmission (30), the electric motor (26), and the steering device (34) are controlled such that the vehicle (20) travels by automated driving, and manual driving control in which the engine (22), the transmission (30), the electric motor (26), and the steering device (34) are controlled such that the vehicle (20) travels by manual driving, the in-vehicle control device (40) comprising a processor (41), wherein
the processor (41) is configured to, at a time of driving force increase request when a driving force increase request is made to bring the vehicle (20) into a predetermined target state during the automated driving control, give priority to driving force increase by the electric motor (26) over driving force increase by the engine (22).

7. The in-vehicle control device (40) according to claim 1 or 6, wherein the processor (41) is configured to, at the time the driving force increase request is made, give priority to driving force increase from the electric motor (26) without downshifting the transmission (30), over driving force increase that involves downshifting of the transmission (30), as compared to the manual driving control.
